# FASCICULE DE BREVET EUROPEEN

(11) **EP 3 230 113 B1**
(45) Date de publication et mention de la délivrance du brevet: **26.09.2018**
(21) Numéro de dépôt: 15820558.3
(22) Date de dépôt: 16.11.2015
(51) Int. Cl.: B60K 37/00, B62D 25/00, B60R 22/22, B60R 22/24, B60R 22/34, B62D 25/20

(54) **GAMME DE VÉHICULES AUTOMOBILES COMPRENANT UNE PLANCHE DE BORD MODULAIRE**
SERIE AN KRAFTFAHRZEUGEN MIT EINEM MODULAREN ARMATURENBRETT
RANGE OF MOTOR VEHICLES COMPRISING A MODULAR DASHBOARD

(30) Priorité: 12.12.2014 FR 1462582
(43) Date de publication de la demande: 18.10.2017
(73) Titulaire: Renault S.A.S., 92100 Boulogne-Billancourt (FR)
(72) Inventeur: DUCHAUSSOY, Daniel, 78370 Plaisir (FR)
(86) Numéro de dépôt international: PCT/FR2015/053082
(87) Numéro de publication internationale: WO 2016/092168

(56) Documents cités:
- EP-A2- 1 134 108
- WO-A1-2004/045937
- CN-A- 104 417 372
- DE-A1- 10 249 514

## Description

### Domaine de l'invention :

La présente invention concerne une planche de bord pour véhicule automobile. Une planche de bord est réalisée généralement d'une seule partie entre les côtés gauche et droit du véhicule.

### Etat de la technique :

De telles planches de bord sont montées généralement sur un seul type de véhicule automobile et sont le plus souvent, pourvues d'une série d'équipements servant au fonctionnement et au confort du véhicule.

Dans le cadre de la demande toujours plus grande d'augmenter les possibilités de montage de planche de bord sur plusieurs types de véhicules, on cherche à rendre ces planches de bord esthétiques en modifiant le minimum de pièces et en conservant les formes et le style de base. Il s'avère que les planches de bord existantes ne permettent pas d'obtenir une pluralité de formes optimales notamment lorsque l'on souhaite le montage de la même planche de bord sur plusieurs véhicules ou réemployer la plus grande partie des composants sur plusieurs véhicules. Il s'en suit une grande diversité de pièces et de composants qui implique entre autre des coûts importants de conception, de fabrication, d'approvisionnement. Le document WO 2004/045937 A1 comprend les caractéristiques du préambule de la revendication 1, et les documents DE10249514 A1 et EP1134108 A2 décrivent des véhicules automobiles pourvus d'éléments de planches de bord ou modules adaptables à plusieurs configurations de véhicules.

### But de l'invention :

La présente invention se propose de résoudre ce problème et d'apporter une solution complémentaire en proposant des parties de planche de bord modulaires agencées pour pouvoir être montées sur plusieurs types différents de véhicules automobiles, ceux-ci se distinguant au moins par des largeurs différentes de planches de bord.

### Objet de l'invention :

Ce but est atteint par une gamme d'au moins deux types différents de véhicules automobiles, dont un premier type de véhicule ayant une petite largeur de planche de bord et un second type de véhicule ayant une grande largeur de planche de bord relativement au premier type, caractérisée en ce que les deux types de véhicules comprennent des parties de planche de bord identiques constituées d'une partie latérale côté conducteur et d'une partie latérale côté passager, les deux types de véhicules comprenant également une partie intermédiaire de planche de bord située entre les parties latérales côté conducteur et côté passager, cette partie intermédiaire étant conformée de façon spécifique à chaque type de véhicule de façon à occuper un petit espace ou un grand espace séparant les parties latérales côté conducteur et côté passager, selon que le véhicule est du premier ou du second type.

Selon l'invention, la gamme de véhicules automobiles comprend également une partie avant de planche de bord située à proximité de la base du pare-brise, cette partie avant étant conformée de façon spécifique à chaque type de véhicule de façon à occuper toute la largeur de la planche de bord, selon que le véhicule est du premier ou du second type.

Selon d'autres caractéristiques avantageuses de l'invention, la partie intermédiaire est jointive et solidaire des parties latérales côté conducteur et côté passager. Selon d'autres caractéristiques avantageuses de l'invention, la partie avant est jointive et solidaire des parties latérales côté conducteur et côté passager et de la partie intermédiaire de planche de bord.

Selon d'autres caractéristiques avantageuses de l'invention, la partie latérale côté conducteur comprend ou renferme les équipements suivants du véhicule: colonne de direction, tableau de bord, commandes et organes de circulation d'air.

Selon d'autres caractéristiques avantageuses de l'invention, les parties latérales du côté conducteur et du côté passager comportent des zones adjacentes aux portes avant ou côtés de caisse du véhicule qui sont conformées de façon symétriques l'une de l'autre par rapport à un plan médian vertical longitudinal du véhicule.

Selon d'autres caractéristiques avantageuses de l'invention, la partie intermédiaire comprend au moins une partie des équipements suivants : zone de rangement(s), porte gobelet, sac gonflable.

Selon d'autres caractéristiques avantageuses de l'invention, la partie latérale côté conducteur a une largeur dimensionnée entre la moitié et les trois-quarts de la largeur totale de la planche de bord, notamment environ les trois-quarts de celle-ci pour le premier type de véhicule et environ les deux-tiers de celle-ci pour le second type de véhicule.

Selon d'autres caractéristiques avantageuses de l'invention, les parties latérales côté conducteur et côté passager sont situés respectivement du côté gauche et du côté droit du véhicule ou inversement.

### Exposé de l'invention :

L'invention sera mieux comprise à la lecture de la description suivante d'un exemple non limitatif de l'invention, et à la lumière des dessins annexés sur lesquels :
- la figure 1 est une vue schématique de dessus d'une planche de bord classique de l'état de la technique montée sur un véhicule automobile, l'avant du véhicule étant situé en haut et l'arrière en bas,
- la figure 2 est une vue schématique d'une planche de bord de « petite largeur » agencée sur un premier type de véhicule d'une gamme de véhicules suivant l'invention, et
- la figure 3 est une vue schématique d'une planche de bord de « grande largeur » agencée sur un second type de véhicule d'une gamme de véhicules automobiles suivant l'invention.

Dans la description qui suit, les directions et orientations sont données en référence à un repère XYZ dans lequel X désigne la direction longitudinale avant-arrière du véhicule, orientée vers l'arrière, Y la direction transversale au véhicule, orientée vers la droite et Z est la direction verticale orientée vers le haut. Les notions « avant » et « arrière » s'entendent par rapport à l'orientation classique avant-arrière du véhicule.

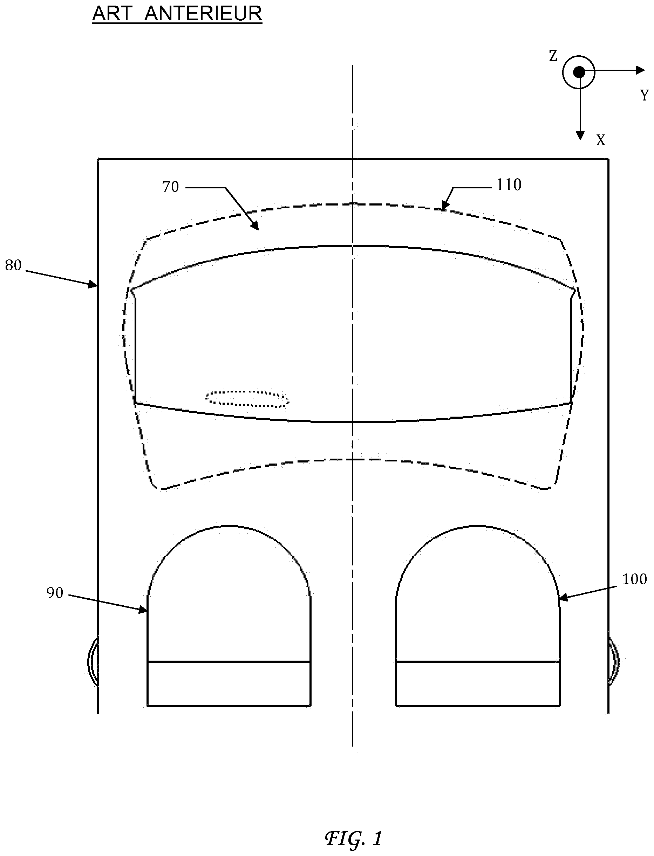

La figure 1 illustre un véhicule automobile 80 connu de l'état de la technique dans lequel une planche de bord 70 spécifique est montée dans la partie avant de l'habitacle. La planche de bord est située à l'avant des sièges conducteur 90 et passager avant 100 du véhicule. La planche de bord 70 est située en dessous d'un pare-brise 110 représenté schématiquement en trait pointillé. Cette planche de bord 70 a une largeur donnée, qui est mesurée suivant la direction transversale Y du véhicule. La planche de bord s'étend ainsi suivant la direction Y entre les côtés de caisse ou portes latérales (non représentées). Les véhicules automobiles connus ont classiquement une planche de bord formée d'un seul bloc. Des véhicules distincts se différenciant par des largeurs différentes de planches de bord ont de façon classique des planches de bord spécifiques à chaque type de véhicule.

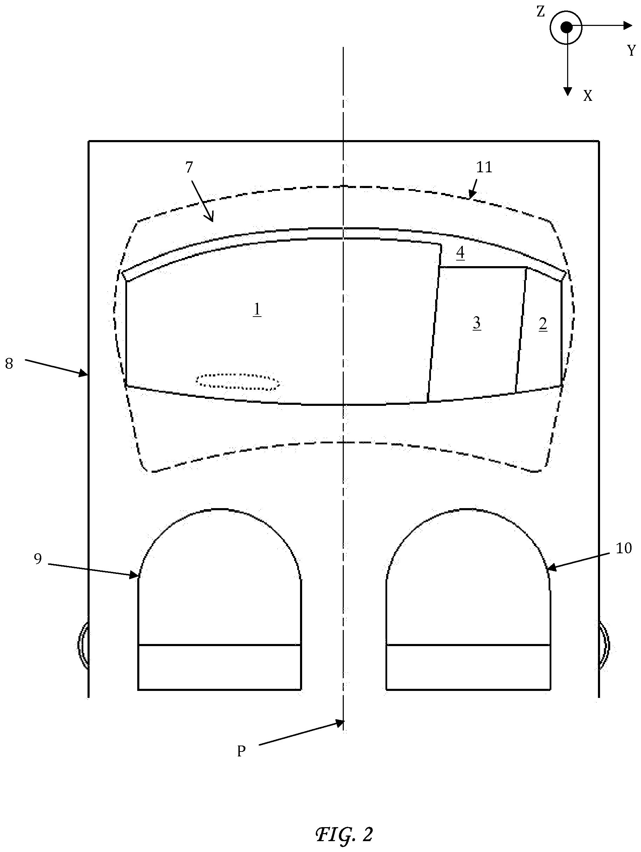

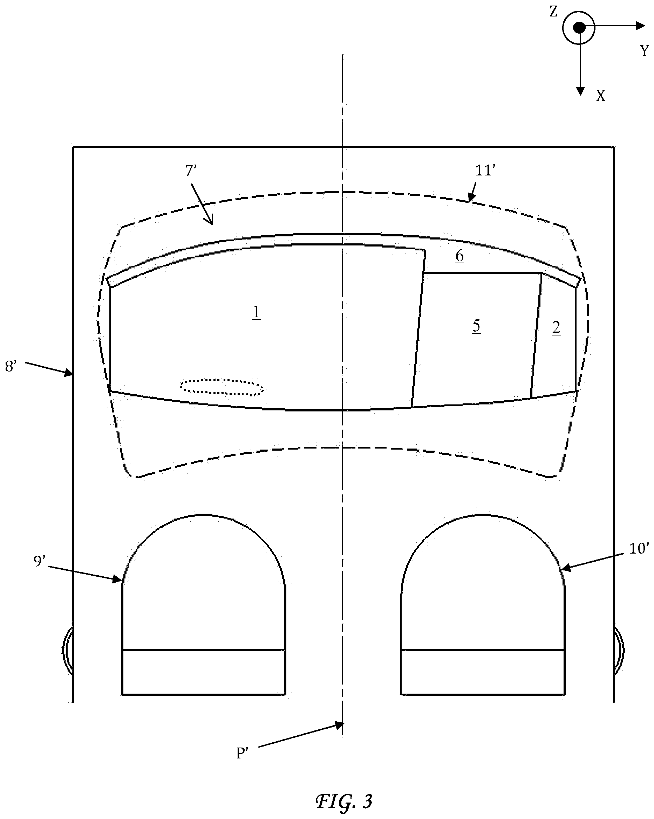

Par contraste, l'invention illustrée aux figures 2 et 3 concerne une gamme d'au moins deux types différents de véhicules automobiles 8, 8', dont la largeur des planches de bord mesurée suivant la direction transversale Y est distincte sur les deux types de véhicules automobiles 8, 8'. La planche de bord 7 représentée à la figure 1 est celle d'un premier type de véhicule automobile 8. La planche de bord 7 de ce véhicule 8 a une petite largeur. La planche de bord 7' représentée à la figure 2 est celle d'un second type de véhicule automobile 8'. La planche de bord 7' de ce véhicule a une grande largeur. Les notions « petite » et « grande » s'entendent de façon relative entre elles, sans que l'invention soit réduite à des largeurs précises et déterminées.

Pour les besoins de l'illustration, on a représenté sur les figures un véhicule de type « direction à gauche », dans lequel le conducteur est assis sur un siège conducteur 9, 9' qui est situé du côté gauche du véhicule. Le passager avant est installé sur un siège passager 10, 10' situé du côté droit du véhicule. On comprend que l'invention s'applique indifféremment pour un véhicule direction à gauche ou direction à droite, étant entendu que la disposition pour ce dernier est inversée par rapport aux figures.

Selon un aspect essentiel de l'invention, les deux types de véhicules 8, 8' comprennent des parties de planche de bord identiques constituées d'une partie latérale côté conducteur 1 et d'une partie latérale côté passager 2, les deux types de véhicules 8, 8' comprenant également une partie intermédiaire 3, 5 de planche de bord située entre les parties latérales côté conducteur 1 et côté passager 2. Cette partie intermédiaire 3, 5 est conformée de façon spécifique à chaque type de véhicule 8, 8' de façon à occuper un petit espace E1 (figure 2) ou un grand espace E2 (figure 3) séparant les parties latérales côté conducteur 1 et côté passager 2, selon que le véhicule est du premier type 8 ou du second type 8'. Le terme « spécifique » signifie que ces parties intermédiaires sont différentes et donc propres à chaque type de véhicules 8, 8'.

Selon un autre aspect de l'invention, la gamme de véhicules comprend une partie avant 4, 6 de planche de bord située à proximité de la base du pare-brise 11, 11', cette partie avant 4, 6 étant conformée de façon spécifique à chaque type de véhicule 8, 8' de façon à occuper toute la petite ou la grande largeur de la planche de bord 7, 7', selon que le véhicule est du premier 8 ou du second type 8'.

La partie latérale côté conducteur 1, la partie latérale côté passager 2, la partie intermédiaire 3, 5 ainsi que la partie avant de planche de bord 7, 7' constitue des blocs autonomes assemblés et acheminés de façon spécifique sur le poste de montage selon que le véhicule destiné à recevoir la planche de bord est un premier type de véhicule 8 (petite largeur) ou un second type de véhicule 8' (grande largeur).

On note encore que la partie intermédiaire 3, 5 est jointive et solidaire des parties latérales côté conducteur 1 et côté passager 2. « Jointif » signifie que les parties 1, 3, 5 d'une part et 2, 3, 5 d'autre part sont accolées étroitement les unes aux autres et coopèrent en contact. La surface extérieure de l'ensemble ainsi constitué est soit continue de façon affleurante, soit discontinue en formant une marche ou un décrochement, afin de satisfaire les besoins de style et d'esthétique du véhicule. « Solidaire » signifie que ces parties sont assemblées et fixées les unes aux autres, soit directement, soit par l'intermédiaire d'un élément commun, par exemple un élément structurel tel qu'une traverse de planche de bord (non représentée).

De même, la partie avant 4, 6 est jointive et solidaire des parties latérales côté conducteur 1 et côté passager 2 et de la partie intermédiaire 3, 5 de planche de bord.

La partie latérale côté conducteur 1 comprend ou renferme les équipements suivants (non représentés) du véhicule: colonne de direction, tableau de bord, commandes et organes de circulation d'air. Un maximum de composants techniques sont donc rassemblés et/ou concentrés dans un même ensemble constitué par la partie latérale côté conducteur 1.

Les parties latérales côté conducteur 1 et côté passager 2 comportent des zones adjacentes aux portes avant ou côtés de caisse du véhicule 8, 8' qui sont conformées de façon symétriques l'une de l'autre par rapport à un plan P, P' médian vertical longitudinal du véhicule. Ainsi les zones latérales les plus à l'extérieur de la planche de bord 8, 8' ont un même aspect pour offrir une homogénéité de forme et de style. Toutefois dans un mode de réalisation non représenté de l'invention, ces extrémités extérieures de la partie latérale côté conducteur 1 et de la partie latérale côté passager 2 peuvent être non symétriques sans sortie du cadre de l'invention si le style du véhicule le prescrit.

La partie intermédiaire 3, 5 comprend au moins une partie des équipements suivants (non représentés): zone de rangement(s), porte gobelet, sac gonflable.

En référence aux figures 2 et 3, la partie latérale côté conducteur 1 a une largeur dont la dimension représente entre la moitié et les trois-quarts de la largeur totale de la planche de bord 7, 7'. Cette proportion est d'environ trois-quarts pour le premier type de véhicule 7 (figure 2) et est d'environ deux-tiers pour le second type de véhicule 7' (figure 3). A titre d'exemple non limitatif de l'invention, la dimension mesurée suivant la direction transversale Y du véhicule est de 76 cm pour le véhicule du premier type et de 29 cm pour le second type.

En référence à la figure 2, les différentes parties 1, 2, 3, 4 de la planche de bord 7sont assemblées pour ne faire qu'une seule pièce, de façon à correspondre à une planche de bord de petite largeur, montée sur un premier type de véhicule 8. En référence à la figure 3, les différentes parties 1, 2, 5, 6 de la planche de bord 7' sont assemblées pour ne faire qu'une seule pièce, de façon à correspondre à une planche de bord de grande largeur montée sur un second type de véhicule 8' plus large que le premier.

Il ressort clairement de la description ci-dessus que l'invention permet d'atteindre les buts fixes et d'obtenir une pluralité de planche de bord sur des véhicules de différentes largeurs en ayant le maximum de pièces identiques.

Bien entendu, la présente invention n'est pas limite aux exemples de réalisation décrits mais s'étend à toute modification et variantes évidentes pour l'homme métier. Notamment, la forme, la dimension, la disposition, le nombre et le choix des différentes pièces qui composent la planche de bord peuvent varier tout en restant dans l'étendue de la protection de l'invention définie par les revendications annexées.

## Revendications

1. Gamme d'au moins deux types différents de véhicules automobiles, dont un premier type de véhicule (8) ayant une petite largeur de planche de bord (7) et un second type de véhicule (8') ayant une grande largeur de planche de bord (7') relativement au premier type, les deux types de véhicules (8, 8') comprenant des parties de planche de bord identiques constituées d'une partie latérale côté conducteur (1) et d'une partie latérale côté passager (2), les deux types de véhicules (8, 8') comprenant également une partie intermédiaire (3, 5) de planche de bord située entre les parties latérales côté conducteur (1) et côté passager (2), cette partie intermédiaire (3, 5) étant conformée de façon spécifique à chaque type de véhicule (8, 8') de façon à occuper un petit espace (E1) ou un grand espace (E2) séparant les parties latérales côté conducteur (1) et côté passager (2), selon que le véhicule est du premier (8) ou du second type (8'), **caractérisé en ce qu'**elle comprend également une partie avant (4, 6) de planche de bord située à proximité de la base du pare-brise (11, 11'), cette partie avant (4, 6) étant conformée de façon spécifique à chaque type de véhicule (8, 8') de façon à occuper toute la largeur de la planche de bord (7, 7'), selon que le véhicule est du premier (8) ou du second type (8').

2. Gamme de véhicules automobiles selon la revendication 1, **caractérisée en ce que** la partie intermédiaire (3, 5) est jointive et solidaire des parties latérales côté conducteur (1) et côté passager (2).

3. Gamme de véhicules automobiles selon la revendication 2, **caractérisée en ce que** la partie avant (4, 6) est jointive et solidaire des parties latérales côté conducteur (1) et côté passager (2) et de la partie intermédiaire (3, 5) de planche de bord.

4. Gamme de véhicules automobiles selon l'une des revendications précédentes, **caractérisée en ce que** la partie latérale côté conducteur (1) comprend ou renferme les équipements suivants du véhicule : colonne de direction, tableau de bord, commandes et organes de circulation d'air.

5. Gamme de véhicules automobiles selon l'une quelconque des revendications précédentes, **caractérisée en ce que** les parties latérales côté conducteur (1) et côté passager (2) comportent des zones adjacentes aux portes avant ou côtés de caisse du véhicule qui sont conformées de façon symétriques l'une de l'autre par rapport à un plan (P, P') médian vertical longitudinal du véhicule.

6. Gamme de véhicule automobiles selon l'une quelconque des revendications précédentes, **caractérisée en ce que** la partie intermédiaire (3, 5) comprend au moins une partie des équipements suivants : zone de rangement(s), porte gobelet, sac gonflable.

7. Gamme de véhicule automobiles selon l'une quelconque des revendications précédentes, **caractérisée en ce que** la partie latérale côté conducteur (1) a une largeur dimensionnée entre la moitié et les trois-quarts de la largeur totale de la planche de bord (7, 7'), notamment environ les trois-quarts de celle-ci pour le premier type de véhicule (8) et environ les deux-tiers de celle-ci pour le second type de véhicule (8').

8. Gamme de véhicule automobiles selon l'une quelconque des revendications précédentes, **caractérisée en ce que** les parties latérales côté conducteur (1) et côté passager (2) sont situés respectivement du côté gauche et du côté droit du véhicule ou inversement.

## Patentansprüche

1. Sortiment von wenigstens zwei verschiedenen Typen von Kraftfahrzeugen, wovon ein erster Fahrzeugtyp (8) ein Armaturenbrett (7) mit geringer Breite besitzt und wovon ein zweiter Fahrzeugtyp (8') ein Armaturenbrett (7') mit großer Breite relativ zu dem ersten Typ besitzt, wobei die beiden Fahrzeugtypen (8, 8') identische Armaturenbrettteile enthalten, die aus einem seitlichen Teil auf der Fahrerseite (1) und aus einem seitlichen Teil auf der Beifahrerseite (2) gebildet sind, wobei die beiden Fahrzeugtypen (8, 8') außerdem einen mittleren Teil (3, 5) des Armaturenbretts enthalten, der sich zwischen den seitlichen Teilen auf der Fahrerseite (1) und auf der Beifahrerseite (2) befindet, wobei dieser mittlere Teil (3, 5) speziell an jeden Fahrzeugtyp (8, 8') angepasst ist, derart, dass er einen kleinen Raum (E1) oder einen großen Raum (E2) einnimmt, der die seitlichen Teile auf der Fahrerseite (1) und auf der Beifahrerseite (2) trennt, je nachdem, ob das Fahrzeug vom ersten Typ (8) oder vom zweiten Typ (8') ist, **dadurch gekennzeichnet, dass** er außerdem einen vorderen Teil (4, 6) des Armaturenbretts umfasst, der sich in der Nähe der Unterseite der Windschutzscheibe (11, 11') befindet, wobei dieser vordere Teil (4, 6) speziell an jeden Fahrzeugtyp (8, 8') angepasst ist, derart, dass er die gesamte Breite des Armaturenbretts (7, 7') einnimmt, je nachdem, ob das Fahrzeug vom ersten Typ (8) oder vom zweiten Typ (8') ist.

2. Sortiment von Kraftfahrzeugen nach Anspruch 1, **dadurch gekennzeichnet, dass** der Mittelteil (3, 5) die seitlichen Teile auf der Fahrerseite (1) und auf der Beifahrerseite (2) verbindet und mit diesen fest verbunden ist.

3. Sortiment von Kraftfahrzeugen nach Anspruch 2, **dadurch gekennzeichnet, dass** der vordere Teil (4, 6) die seitlichen Teile auf der Fahrerseite (1) und auf der Beifahrerseite (2) und den mittleren Teil (3, 5) der Armaturentafel verbindet und mit diesen fest verbunden ist.

4. Sortiment von Kraftfahrzeugen nach einem der vorhergehenden Ansprüche, **dadurch gekennzeichnet, dass** der seitliche Teil auf der Fahrerseite (1) die folgenden Ausstattungen des Fahrzeugs umfasst oder umgibt: Lenksäule, Instrumententafel, Steuerungen und Organe für die Luftzirkulation.

5. Sortiment von Kraftfahrzeugen nach einem der vorhergehenden Ansprüche, **dadurch gekennzeichnet, dass** die seitlichen Teile auf der Fahrerseite (1) und auf der Beifahrerseite (2) Zonen aufweisen, die zu den vorderen Türen oder den Seiten der Karosserie des Fahrzeugs benachbart sind, die in Bezug auf eine vertikale Medianebene (P, P') in Längsrichtung des Fahrzeugs zueinander symmetrisch ausgebildet sind.

6. Sortiment von Kraftfahrzeugen nach einem der vorhergehenden Ansprüche, **dadurch gekennzeichnet, dass** der mittlere Teil (3, 5) wenigstens einen Teil der folgenden Ausstattungen enthält: eine oder mehrere Aufbewahrungszonen, Becherhalter, Airbag.

7. Sortiment von Kraftfahrzeugen nach einem der vorhergehenden Ansprüche, **dadurch gekennzeichnet, dass** der seitliche Teil auf der Fahrerseite (1) eine Breite hat, die eine Abmessung im Bereich von der Hälfte bis zu drei Vierteln der Gesamtbreite des Armaturenbretts (7, 7'), insbesondere von etwa drei Vierteln derselben für den ersten Fahrzeugtyp (8) und von etwa zwei Dritteln derselben für den zweiten Fahrzeugtyp (8') besitzt.

8. Sortiment von Kraftfahrzeugen nach einem der vorhergehenden Ansprüche, **dadurch gekennzeichnet, dass** sich die seitlichen Teile auf der Fahrerseite (1) und auf der Beifahrerseite (2) auf der linken Seite bzw. auf der rechten Seite des Fahrzeugs befinden oder umgekehrt.

## Claims

1. Range of at least two different types of motor vehicles, including a first type of vehicle (8) having a small dashboard (7) width and a second type of vehicle (8') having a large dashboard (7') width relative to the first type, the two types of vehicles (8, 8') comprising identical dashboard parts made up of a driver's-side lateral part (1) and of a passenger-side lateral part (2), the two types of vehicles (8, 8') also comprising an intermediate dashboard part (3, 5) situated between the driver's-side lateral part (1) and passenger-side lateral part (2), this intermediate part (3, 5) being configured specifically to each type of vehicle (8, 8') so as to occupy a small space (E1) or a large space (E2) separating the driver's-side lateral part (1) and passenger-side lateral part (2), depending on whether the vehicle is of the first type (8) or of the second type (8'), **characterized in that** it also comprises a front dashboard part (4, 6) situated in the vicinity of the base of the windscreen (11, 11'), this front part (4, 6) being configured specifically to each type of vehicle (8, 8') so as to occupy the entire width of the dashboard (7, 7'), depending on whether the vehicle is of the first type (8) or of the second type (8').

2. Range of motor vehicles according to Claim 1, **characterized in that** the intermediate part (3, 5) is contiguous with and secured to the driver's-side lateral part (1) and passenger-side lateral part (2).

3. Range of motor vehicles according to Claim 2, **characterized in that** the front part (4, 6) is contiguous with and secured to the driver's-side lateral part (1) and passenger-side lateral part (2) and the intermediate dashboard part (3, 5).

4. Range of motor vehicles according to one of the preceding claims, **characterized in that** the driver's-side lateral part (1) comprises or contains the following equipment of the vehicle: steering column, instrument panel, air-circulation controls and members.

5. Range of motor vehicles according to any one of the preceding claims, **characterized in that** the driver's-side lateral part (1) and passenger-side lateral part (2) comprise regions adjacent to the front doors or body sides of the vehicle which are configured symmetrically to one another with respect to a longitudinal vertical median plane (P, P') of the vehicle.

6. Range of motor vehicles according to any one of the preceding claims, **characterized in that** the intermediate part (3, 5) comprises at least some of the following equipment: stowage region, cup holder, airbag.

7. Range of motor vehicles according to any one of the preceding claims, **characterized in that** the driver's-side lateral part (1) has a width dimensioned between half and three-quarters of the total width of the dashboard (7, 7'), in particular approximately three-quarters thereof for the first type of vehicle (8) and approximately two-thirds thereof for the second type of vehicle (8').

8. Range of motor vehicles according to any one of the preceding claims, **characterized in that** the driver's-side lateral part (1) and passenger-side lateral part (2) are respectively situated on the left side and on the right side of the vehicle, or vice versa.
